# EUROPÄISCHE PATENTANMELDUNG

(11) **EP 1 978 678 A1**
(43) Veröffentlichungstag der Anmeldung: **08.10.2008**
(21) Anmeldenummer: 08004232.8
(22) Anmeldetag: 07.03.2008
(51) Int. Cl.: H04L 12/28, H04L 29/12

(54) **Externer Zugriff auf lokales Netzwerk mit nichtpermanenter Internet-Anbindung**

(30) Priorität: 05.04.2007 DE 102007016416
(71) Anmelder: Deutsche Telekom AG, 53113 Bonn (DE)
(72) Erfinder: Baumkötter, Manfred, 48346 Ostbevern (DE)

(57) **Zusammenfassung**

Die Erfindung betrifft eine Lösung, welche es ermöglicht, von externer Stelle den Aufbau einer Internetverbindung zu einem lokalen Netzwerk (LAN) zu veranlassen, welches nicht permanent mit dem Internet verbunden ist.

Dabei wird davon ausgegangen, dass der Zugang des lokalen Netzwerks mittels einer zum Netzwerk gehörenden, als Wähl- und Anrufempfangseinrichtung mit Routerfunktionalität ausgebildeten Zugangseinrichtung durch Anwahl eines Interneteinwahlknotens erfolgt. Erfindungsgemäß wird diese Zugangseinrichtung, sofern das lokale Netzwerk bei einem von externer Stelle erfolgenden Zugriffsversuch gerade nicht mit dem Internet verbunden ist, durch einen bei ihr eingehenden Anruf eines entsprechend ausgebildeten DynDNS-Servers zum selbsttätigen Aufbau einer Wählverbindung mit dem Internet veranlasst. Im Zuge des Aufbaus dieser Internetverbindung übergibt die Zugangseinrichtung auch eventuell erforderliche Authentifizierungsdaten an den Einwahlknoten. Sie überträgt ferner die ihr zugewiesene IP-Adresse an den DynDNS-Server, welcher diese über einen entsprechenden Nameserver des ISP an die externe Stelle weiterleitet.

## Beschreibung

Die Erfindung betrifft eine Lösung, welche es ermöglicht, von externer Stelle den Aufbau einer Internetverbindung zu einem lokalen Netzwerk (LAN) zu veranlassen, welches nicht permanent mit dem Internet verbunden ist. Sie bezieht sich auf ein entsprechendes Verfahren sowie eine zu einem lokalen Netzwerk mit ISDN-Internetanbindung gehörende, als ISDN-Wähl- und Anrufempfangseinrichtung mit Routerfunktionalität ausgebildete Zugangseinrichtung und einen DynDNS-Server, welche zur Durchführung des Verfahrens ausgebildet sind.

Computer und andere netzwerkfähige Geräte werden heute häufig über einen Breitbandzugang, wie DSL, an das Internet angebunden. Aufgrund der stark zunehmenden Nutzung von DSL-Flatrate-Tarifen sind entsprechende Geräte dabei zumeist praktisch ständig mit dem Internet verbunden, das heißt permanent online und daher grundsätzlich auch von externer Stelle über das Internet ansprechbar. Zwar besteht das Problem, dass die Geräte beziehungsweise die lokalen Netzwerke, in welche die Geräte eingebunden sind, in der Regel nicht über eine feste IP-Adresse verfügen. Vielmehr handelt es sich bei den ihnen zugewiesenen IP-Adressen im Allgemeinen um dynamische IP-Adressen. Jedoch ist dieses Problem, wonach einer den Kontakt zu einem Netzwerk suchenden externen Stelle die dynamische IP-Adresse des lokalen Netzwerkes zunächst nicht bekannt ist, durch die Nutzung des DynDNS-Verfahrens als gelöst anzusehen. Bei der Anwendung des DynDNS-Verfahrens für lokale Netzwerke, welche von externer Stelle aus erreichbar sein sollen, wird durch einen speziellen Client bei einem Wechsel der dem jeweiligen lokalen Netzwerk zugeteilten dynamischen IP-Adresse automatisch eine Verbindung zu einem so genannten DynDNS-Server aufgebaut und auf diesem die neue IP-Adresse des Netzwerks abgelegt. Hierdurch ist es möglich, von externer Stelle zunächst Kontakt zu dem DynDNS-Server aufzunehmen, von diesem die aktuelle IP-Adresse eines jeweiligen lokalen Netzwerks abzufragen und schließlich unter deren Verwendung das entsprechende lokale Netzwerk zu kontaktieren.
Allerdings sind DSL-Zugänge technisch bedingt nicht flächendeckend verfügbar. Gerade in ländlichen Gegenden ist daher in einigen Bereichen eine Internetanbindung nur über einen Wählzugang, das heißt über ISDN, ein Mobilfunknetz oder gar das analoge Telefonnetz gegeben. Teilweise betrifft dies auch Firmen und Gewerbebetriebe, welche etwas abseits gelegen sind. Da preiswerte Flatrates für Wählverbindungen für eine quasi permanente Online-Verbindung nicht zur Verfügung stehen, ist es derartigen Internetnutzern nicht möglich, ihr lokales Netzwerk von externer Stelle anzusprechen.
Durch eine frühere Anmeldung der Anmelderin wird jedoch eine mögliche Lösung für dieses Problem beschrieben. Gemäß dieser Lösung wird eine von außen erfolgende Kontaktaufnahme zu einem lokalen Netzwerk dadurch ermöglicht, dass in dieses ein speziell ausgebildeter Router eingebunden ist, der durch einen Anruf zum Aufbau einer ISDN-Internetverbindung und zur anschließenden Übermittlung der ihm dabei zugeteilten IP-Adresse an die anrufende Stelle veranlasst wird. Der Lösung haftet jedoch der Nachteil an, dass für den von externer Stelle veranlassten Aufbau einer ISDN-Internetverbindung immer erst ein manueller Aktivierungsanruf bei dem zuvor genannten Router erfolgen muss.

Aufgabe der Erfindung ist es daher, eine alternative Möglichkeit für die externe Ansprache eines lokalen Netzwerks anzugeben, welches nicht permanent mit dem Internet verbunden ist und nur über einen Wählzugang zum Internet verfügt. Dabei soll die von externer Stelle erfolgende Kontaktierung des Netzwerks insbesondere ohne das Erfordernis eines manuell getätigten Aktivierungsanrufs gegeben sein. Vielmehr soll die Kontaktaufnahme, beispielsweise durch die Eingabe einer Internetadresse in die Adresszeile eines Browsers, automatisch erfolgen.

Die Aufgabe wird durch ein Verfahren mit den Merkmalen des Hauptanspruchs gelöst. Eine die Aufgabe lösende, zur Durchführung des Verfahrens sowie als ISDN- Wähl- und Anrufempfangseinrichtung mit Routerfunktionalität ausgebildete Zugangseinrichtung und ein zur Durchführung des Verfahrens geeigneter DynDNS-Server werden durch die entsprechenden Sachansprüche charakterisiert. Vorteilhafte Aus- beziehungsweise Weiterbildungen sind durch die jeweiligen Unteransprüche gegeben.

Gemäß dem zur Lösung der Aufgabe vorgeschlagen Verfahren wird der externe Zugriff auf ein lokales Netzwerk, welches nicht permanent mit dem Internet verbunden ist, unter Nutzung des DynDNS-Systems realisiert. Dabei wird davon ausgegangen, dass der Zugang des lokalen Netzwerks mittels einer zum Netzwerk gehörenden, als Wähl- und Anrufempfangseinrichtung mit Routerfunktionalität ausgebildeten Zugangseinrichtung durch Anwahl eines Interneteinwahlknotens erfolgt. Die vorgenannte, entsprechend ausgebildete Zugangseinrichtung des lokalen Netzwerks wird, sofern das lokale Netzwerk bei einem von externer Stelle erfolgenden Zugriffsversuch gerade nicht mit dem Internet verbunden ist, durch einen bei ihr eingehenden Anruf zum selbsttätigen Aufbau einer Wählverbindung mit dem Internet veranlasst. Erfindungsgemäß geschieht dies durch einen Anruf von einem entsprechend ausgebildeten DynDNS-Server bei der Zugangseinrichtung. Aufgrund des bei ihr eingehenden Anrufs des DynDNS-Servers baut die Zugangseinrichtung selbsttätig eine Wählverbindung zu dem Einwahlknoten und damit mit dem Internet auf und übergibt dabei auch die eventuell erforderlichen Authentifizierungsdaten. Weiterhin überträgt die Zugangseinrichtung nach dem Aufbau der Verbindung zum Internet die ihr im Zuge dessen zugewiesene IP-Adresse an den DynDNS-Server. Der DynDNS-Server leitet die IP-Adresse über den Nameserver des Internet Service Providers, welcher der den Kontakt zum lokalen Netzwerk suchenden externen Stelle den Zugriff auf das Internet und damit auf den DynDNS-Server ermöglicht, an die betreffende externe Stelle weiter.
Die Erfindung geht bevorzugt von einem über ISDN erfolgenden Zugang des lokalen Netzwerks zum Internet aus, ohne jedoch hierauf beschränkt zu sein. Vielmehr ist das erfinderische Grundprinzip auch bei Konstellationen anwendbar, bei denen der Zugang des lokalen Netzwerks zum Internet über einen anderen Wählzugang, beispielsweise mittels eines entsprechend modifizierten analogen Modems oder unter Nutzung des Mobilfunks erfolgt. Im Hinblick auf den bevorzugten Einsatz für eine über ISDN erfolgende Internetnetanbindung des lokalen Netzwerks handelt es sich bei der bereits erwähnten Wähl- und Anrufempfangseinrichtung mit Routerfunktionalität beispielsweise um einen entsprechend modifizierten ISDN-Router oder um eine ISDN-TK-Anlage mit Routerfunktionen.

Gemäß einer praxisgerechten Verfahrensweise vollzieht sich folgender Ablauf:
a) Von einem internetfähigen, externen, nicht zu dem zu kontaktierenden lokalen Netzwerk gehörenden Gerät wird zunächst eine Verbindung zu einem DynDNS-Server aufgebaut. Der Verbindungsaufbau erfolgt unter Verwendung einer dem lokalen Netzwerk im DynDNS-System zugewiesenen und bei der externen Stelle bekannten Adresse, nämlich einer DynDNS-Adresse des lokalen Netzwerks. Dazu wird unter Angabe der DynDNS-Adresse des Netzwerks mittels eines zur Kontaktaufnahme mit dem Netzwerk benutzten Gerätes eine Internetverbindung aufgebaut. Die beim Verbindungsaufbau von externer Stelle angefragte Adresse, nämlich die DynDNS-Adresse des Netzwerks, wird wie aus dem Stand der Technik bekannt, von einem Nameserver des dem externen Gerät den Zugang zum Internet ermöglichenden Internet Service Provider (ISP) in eine IP-Adresse umgesetzt. Dies geschieht durch eine Anfrage beim DynDNS-Server, auf welchem die jeweilige IP-Adresse des lokalen Netzwerks registriert ist.
b) Durch den gemäß a) kontaktierten und hierfür ausgebildeten DynDNS-Server wird geprüft, ob auf das angesprochene lokale Netzwerk über die für dieses Netzwerk im DynDNS-Server vermerkte IP-Adresse ein Zugriff gegeben ist. Dies kann zum Beispiel erfolgen, indem geprüft wird, ob ein DynDNS-Client zyklische Online-Signale sendet.
c) Verläuft die Prüfung gemäß b) positiv, das heißt es treffen zum Beispiel zyklische Online-Signale eines DynDNS-Client erwartungsgemäß ein, so teilt der DynDNS-Server der den Zugriff auf das lokale Netzwerk wünschenden externen Stelle diese IP-Adresse über den von ihr zum Verbindungsaufbau mit dem Internet genutzten Nameserver mit.
d) Ist das Ergebnis der Prüfung nach b) negativ, erfolgt ein Anruf des dazu ausgebildeten DynDNS-Servers bei der bereits mehrfach erwähnten Zugangseinrichtung des lokalen Netzwerks unter Verwendung einer in Zuordnung zur DynDNS-Adresse des lokalen Netzwerks auf dem DynDNS-Server gespeicherten Rufnummer.
e) Beim Eingang des Anrufs des DynDNS-Servers wird durch die hierfür ausgebildete Zugangseinrichtung des lokalen Netzwerks durch Anwahl einer in dieser Einheit hinterlegten Rufnummer eines Interneteinwahlknotens und Übergabe eventuell erforderlicher Authentifizierungsdaten selbsttätig eine Wählverbindung zum Internet aufgebaut.
f) Die Zugangseinrichtung übermittelt die ihr im Zuge des gemäß e) erfolgten Verbindungsaufbaus zugewiesene IP-Adresse an den DynDNS-Server.
g) Der DynDNS-Server leitet die die ihm gemäß f) übermittelte IP-Adresse an das externe, internetfähige, den Zugriff auf das lokale Netzwerk wünschende Gerät über den bereits erwähnten Nameserver weiter.

Entsprechend einer vorteilhaften Gestaltung des Verfahrens genügt bereits die Signalisierung des Rufes des DynDNS-Servers bei der Zugangseinrichtung, um diese zu selbsttätigen Aufbau der Internetverbindung und zu der dabei gegebenenfalls erforderlichen Übergabe von Authentifizierungsdaten an den Einwahlkoten zu veranlassen. Das heißt, hierbei ist es nicht erforderlich, dass eine Kosten verursachende Wählverbindung zwischen dem DynDNS-Server und der Zugangseinrichtung zustande kommt. Im Falle eines ISDN-Zugangs des lokalen Netzwerks und einer folglich als ISDN-Wähl- und Anrufempfangseinrichtung mit Routerfunktionalität ausgebildeten Zugangseinrichtung des lokalen Netzwerks genügt also beispielsweise die Signalisierung des Anrufs des DynDNS-Servers im Steuerkanal (D-Kanal). Vergleichbares ist bei einer Anbindung des Netzwerks über Mobilfunk denkbar.

Für Netzwerke mit analogem Festnetzzugang kommt diese Ausbildungsform hingegen eher nicht in Betracht.
Auch eine weitere Ausgestaltungsmöglichkeit der Erfindung bezieht sich vorzugsweise auf lokale Netzwerke mit ISDN-Zugang zum Internet. Sofern dabei dem entsprechenden ISDN-Anschluss, wie in der Praxis üblich, mehrere MSNs zugeordnet sind, ist das Verfahren vorteilhafter Weise so ausgebildet, dass durch die Zugangseinrichtung des lokalen Netzwerks ein selbsttätiger Verbindungsaufbau zum Internet nur beim Eingang eines Rufes unter einer bestimmten, dazu vorgegebenen ISDN-Rufnummer (Zielreferenzrufnummer) erfolgt. Darüber hinaus ist es denkbar, das Verfahren so auszugestalten, dass durch die Zugangseinrichtung des lokalen Netzwerks die Rufnummern aller bei ihr eingehenden Rufe daraufhin überprüft werden, ob sie mit einer in der Zugangseinrichtung hinterlegten Absenderreferenzrufnummer des in das Verfahren einbezogenen DynDNS-Servers übereinstimmen. Ein selbsttätiger Verbindungsaufbau zum Internet erfolgt dann selbstverständlich nur im Falle eines positiven Ergebnisses der vorgenannten Prüfung.
Eine zur Durchführung des Verfahrens, für den Fall eines ISDN-Zugangs des lokalen Netzwerks zum Internet ausgebildete Zugangseinrichtung ist als eine ISDN-Wähl- und Anrufempfangseinrichtung mit Routerfunktionalität ausgebildet. Sie weist eine Verarbeitungseinheit und einen konfigurierbaren Speicher oder Speicherbereich auf, in welchem mindestens eine Einwahlnummer für einen Interneteinwahlknoten hinterlegt ist. Erfindungsgemäß ist die Verarbeitungseinheit ferner zur Ausführung einer Firmware ausgebildet, mittels welcher ein Betriebsmodus der Zugangseinrichtung aktivierbar ist, in welchem von der Zugangseinrichtung beim Eingang eines Anrufs durch die Anwahl des Einwahlknotens mit der in ihrem Speicher hinterlegten Einwahlnummer und die eventuell erforderliche Übergabe von Authentifizierungsdaten an diesen Einwahlknoten selbsttätig eine Internetverbindung aufgebaut und die der Einheit im Zuge des Verbindungsaufbaus zugewiesene IP-Adresse an den DynDNS-Server übertragen wird. Über die entsprechende Zugangseinrichtung sind die mit dieser Zugangseinrichtung in einem lokalen Netzwerk vernetzten Geräte über eine Internetverbindung ansprechbar.

Hierzu ist die Verarbeitungseinheit der erfindungsgemäßen Zugangseinrichtung für den ISDN-Betrieb vorzugsweise zur Ausführung einer Firmware ausgebildet, durch welche nach dem Aufbau einer ISDN-Internetverbindung eine entsprechende Softwareroutine gestartet wird. Bei dieser Softwareroutine handelt es sich um einen DynDNS-Client, welcher auf der Zugangseinrichtung selbst oder einer anderen, zum lokalen Netzwerk gehörenden Einheit abläuft. Der entsprechende DynDNS-Client übermittelt die der Zugangseinrichtung beim Aufbau der ISDN-Internetverbindung zugewiesene IP-Adresse über das Internet an den in das Verfahren einbezogenen DynDNS-Server.
Vorzugsweise ist die erfindungsgemäße Zugangseinrichtung, wie schon erwähnt als ein entsprechend modifizierter ISDN-Router ausgebildet. Sie kann darüber hinaus aber auch Teil einer TK-Anlage mit Routerfunktionalität oder eines PCs sein. Im letztgenannten Falle ist die ISDN-Einheit vorzugsweise als eine ISDN-Einsteckkarte für den PC ausgebildet, welche ebenfalls über Routerfunktionen verfügt.
Der zur Durchführung des erfindungsgemäßen Verfahrens geeignete DynDNS-Server zeichnet sich dadurch aus, dass er eine durch seine Betriebssoftware ansteuerbare Wähleinrichtung umfasst oder ihm eine solche Wähleinrichtung zugeordnet ist.

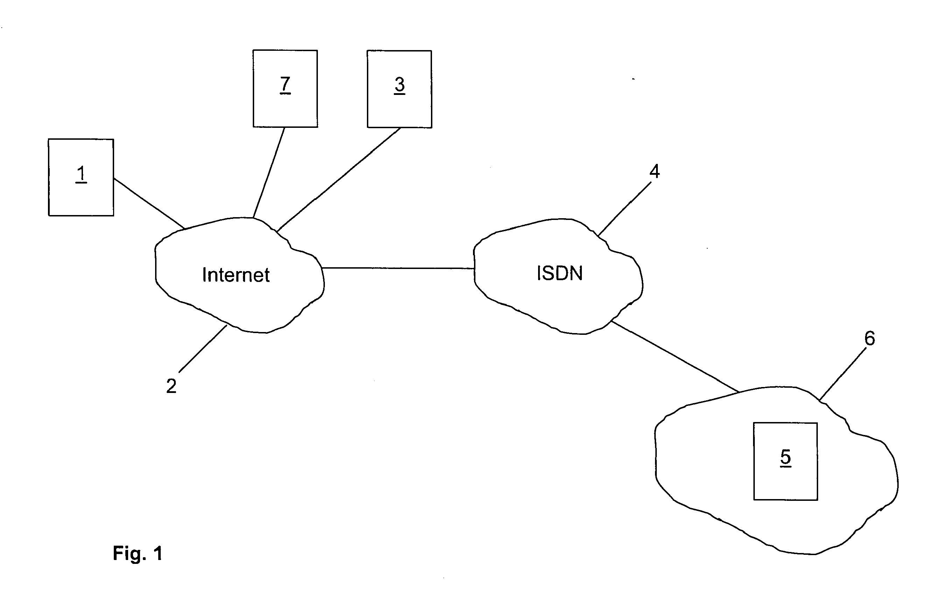

Nachfolgend sollen Aspekte der Erfindung nochmals anhand eines Ausführungsbeispiels erläutert werden, für welches in der Fig. 1 eine vereinfachte schematische Darstellung gegeben ist. Das Ausführungsbeispiel bezieht sich auf ein lokales Netzwerk, welches über eine ISDN-Wählverbindung mit dem Internet verbindbar ist.
Die Fig. 1 zeigt ein lokales Netz 6, welches über einen Zugang des ISDN-Netzes 4 mit dem Internet 2 verbindbar ist. Bestandteil dieses lokalen Netzwerks 2 ist ein modifizierter ISDN-Router 5. Während bisher bekannte ISDN-Router eine Verbindung zum Internet 2 ausschließlich im Falle des Empfangs von Datenpaketen von Geräten aus dem zugehörigen Netzwerk 6 aufbauen, ist dieser ISDN-Router 5 dahingehend modifiziert, dass er eine Verbindung auch beim Eingang eines ihn dazu initiierenden Anrufs aufbaut. Mittels eines solchen, gemäß der Erfindung durch den DynDNS-Server 3 erfolgenden Anrufs kann daher über den die Verbindung zum Internet aufbauenden modifizierten ISDN-Router 5 von außen auf das lokale Netzwerk (6) und die sich in ihm befindenden Geräte zugegriffen werden. Das entsprechende lokale Netzwerk 6 ist dazu bei dem DynDNS-Server 3 angemeldet. Nach der erfindungsgemäßen Lösung vollzieht sich bei der Kontaktierung des lokalen Netzwerks 6 mittels eines nicht zum Netzwerk 6 gehörenden IP-fähigen Gerätes 1, vorzugsweise und gemäß dem Beispiel mittels eines PCs, folgender Ablauf. Zur Kontaktaufnahme mit dem Netzwerk 6 wird der Aufbau einer Remote-Desktop-Verbindung gestartet und hierbei die DynDNS-Adresse des lokalen Netzwerks 6 beispielsweise in der Form "Hans.Mustermann.dyndns.org" angegeben. Diese Adresse wird dabei von dem Nameserver 7, eines dem externen Gerät den Zugang zum Internet ermöglichenden ISP in eine IP-Adresse umgesetzt und zwar hier durch eine Anfrage beim DynDNS-Servers 3, welcher die DynDNS-Adresse des lokalen Netzwerks 6 unter Zuordnung zu dessen jeweiliger aktueller IP-Adresse verwaltet. Der hierdurch kontaktierte DynDNS-Server 3 prüft zunächst, ob das entsprechende lokale Netzwerk 6 augenblicklich über das Internet 2 erreichbar ist, beispielsweise dadurch, dass von diesem zyklisch Online-Signale eines DynDNS-Clients beim DynDNS-Server eingehen oder dass der DynDNS-Server 3 das Netzwerk 6 beziehungsweise dessen ISDN-Router 5 anruft und letzterer den Anruf des DynDNS-Servers bei Bestehen einer Internetverbindung abweist. Sofern der DynDNS-Server dabei feststellt, dass das Netzwerk über das Internet erreichbar ist, wird die aktuelle IP-Adresse vom DynDNS-Server 3 über den Nameserver 7 an den PC 1 übermittelt, von welchem unter Nutzung dieser IP-Adresse die Verbindung zum lokalen Netzwerk 6 aufgebaut werden kann. Sofern es dem DynDNS-Server 3 nicht möglich ist, das lokale Netzwerk 6 zu kontaktieren und somit für dieses eine aktuelle IP-Adresse an den PC 1 zu übermitteln, wird durch eine auf dem DynDNS-Server 3 ablaufende Software unter Nutzung der in einer entsprechenden Datenbank des DynDNS-Servers 3 gehaltenen ISDN-Rufnummer der ISDN-Router 5 angerufen. Der ISDN-Router 5 seinerseits ist so konfiguriert, dass er alle unter der entsprechenden MSN bei ihm eingehenden Anrufe als Startanruf interpretiert Daher bewirkt die Signalisierung des entsprechenden Anrufs des DynDNS-Servers 3 bei dem modifizierten ISDN-Router 5, dass dieser selbsttätig eine ISDN-Verbindung mit dem Internet 2 aufbaut, indem er einen in seinem Speicher hinterlegten Interneteinwahlknoten anwählt und an diesen bei bestehender Verbindung die eventuell erforderlichen Authentifizierungsdaten übergibt.
Über die daraufhin aufgebaute Internetverbindung übermittelt der ISDN-Router 5 die ihm im Zuge dessen zugewiesene IP-Adresse an den DynDNS-Server 3. Der DynDNS-Server 3 leitet die IP-Adresse über den Nameserver 7 an den PC 1 weiter, wo sie zur Kontaktierung des lokalen Netzwerks 6 genutzt werden kann.

### Liste der verwendeten Bezugszeichen

- 1: (externe) Stelle beziehungsweise (externes) Gerät, zum Beispiel PC
- 2: Internet
- 3: DynDNS-Server
- 4: Wählnetz, zum Beispiel ISDN-Netz
- 5: Zugangseinrichtung (wähl- und Anrufempfangseinrichtung mit Routerfunktionalität), zum Beispiel modifizierter ISDN-Router
- 6: lokales Netzwerk
- 7: Nameserver ISP

## Patentansprüche

1. Verfahren für den externen Zugriff auf ein lokales Netzwerk (6) mit nicht permanenter Online-Anbindung an das Internet (2), von welchem aus eine Verbindung zum Internet (2) nur über einen Einwahl-Zugang in einem Wählnetz (4) herstellbar ist, wobei das lokale Netzwerk (6) mittels einer zum lokalen Netzwerk (6) gehörenden, als Wähl- und Anrufempfangseinrichtung mit Routerfunktionalität ausgebildeten Zugangseinrichtung (5), durch Anwahl eines lnterneteinwahlknotens mit dem Internet (2) verbindbar und beim Bestehen einer Internetverbindung von externer Stelle (1) über einen Nameserver (7) eines Internet Service Providers und einen DynDNS-Server (3) kontaktierbar ist, **dadurch gekennzeichnet, dass** die dazu ausgebildete Zugangseinrichtung (5) des lokalen Netzwerks (6), sofern das lokale Netzwerk (6) bei einem von externer Stelle (1) erfolgenden Zugriffsversuch nicht mit dem Internet (2) verbunden ist, durch einen bei ihr eingehenden Anruf des dazu ausgebildeten DynDNS-Servers (3) zum selbsttätigen Aufbau einer Wählverbindung mit Internet (2) und zur Übergabe eventuell erforderlicher Authentifizierungsdaten veranlasst wird und dass die Zugangseinrichtung (5) nach dem Aufbau der Verbindung zum Internet (2) die ihr im Zuge dessen zugewiesene IP-Adresse an den DynDNS-Server (3) überträgt, welcher die IP-Adresse zur Kontaktierung des lokalen Netzwerks (6) über den Nameserver (7) an die diesen Kontakt suchende externe Stelle (1) weiterleitet.

2. Verfahren nach Anspruch 1, **dadurch gekennzeichnet, dass** für einen von externer Stelle (1) über den DynDNS-Server (3) auf das lokale Netzwerk (6) erfolgenden Zugriff
a) von einem internetfähigen externen, nicht zu dem vorgenannten lokalen Netzwerk (6) gehörenden Gerät (1) unter Verwendung einer dem lokalen Netzwerk (6) im DynDNS-System zugewiesenen Adresse über einen Nameserver (7) eines dem Gerät (1) den Zugang zum Internet (2) ermöglichenden Internet Service Providers eine Verbindung zu einem DynDNS-Server (3) aufgebaut wird,
b) durch den gemäß a) kontaktierten hierfür ausgebildeten DynDNS-Server (3) geprüft wird, ob auf das angesprochene lokale Netzwerk (6) über die zuletzt für dieses Netzwerk (6) im DynDNS-Server (3) vermerkte IP-Adresse ein Zugriff gegeben ist,
c) bei nach b) positiver Prüfung durch den DynDNS-Server (3) die entsprechende IP-Adresse über den Nameserver (7) an das externe internetfähige Gerät (1) für den Aufbau einer IP-Verbindung zu dem lokalen Netzwerk (6) übermittelt wird,
d) bei nach b) negativer Prüfung durch den hierfür ausgebildeten DynDNS-Server (3) unter Verwendung einer in einer Datenbank des DynDNS-Servers (3) in Zuordnung zu dem angesprochenen lokalen Netzwerk (6) hinterlegten Rufnummer eine Wählverbindung zu dessen Zugangseinrichtung (5) aufgebaut wird,
e) von der gemäß d) durch den DynDNS-Server (3) über eine Wählverbindung kontaktierten, hierfür ausgebildeten Zugangseinrichtung (5) des lokalen Netzwerks (6), ausgelöst durch den Anruf des DynDNS-Servers, durch Anwahl eines Einwahlknotens und Übergabe eventuell erforderlicher Authentifizierungsdaten selbsttätig eine Wählverbindung zum Internet (2) aufgebaut wird,
f) durch die hierfür ausgebildete Zugangseinrichtung (5) des lokalen Netzwerks (6) die ihr im Zuge des Verbindungsaufbaus zum Internet (2) gemäß e) zugewiesene IP-Adresse an den DynDNS-Server (3) übermittelt wird,
g) durch den DynDNS-Server (3) die ihm gemäß f) übermittelte IP-Adresse über den Nameserver (7) an das externe internetfähige Gerät (1) für den Aufbau einer IP-Verbindung zu dem lokalen Netzwerk (6) weitergeleitet wird.

3. Verfahren nach Anspruch 1 oder 2, **dadurch gekennzeichnet, dass** die Signalisierung des Rufes des DynDNS-Servers (3) bei der Zugangseinrichtung (5) genügt, um diese zu selbsttätigen Aufbau der Wählverbindung zum Internet und zu der dabei gegebenenfalls erforderlichen Übergabe von Authentifizierungsdaten an den Einwahlkoten zu veranlassen.

4. Verfahren nach einem der Ansprüche 1 bis 3, **dadurch gekennzeichnet, dass** die Zugangseinrichtung (5) für den Aufbau einer Wählverbindung über mehrere Zielrufnummern ansprechbar ist, von ihr aber die Zielrufnummern aller eingehenden Anrufe mit einer in einem Speicher der Zugangseinrichtung (5) hinterlegten Zielreferenzrufnummer jeweils verglichen und von der Zugangseinrichtung (5) nur im Falle einer Übereinstimmung der jeweils angerufenen Zielrufnummer mit der in ihrem Speicher hinterlegten Rufnummer selbsttätig eine lnternetverbindung aufgebaut wird.

5. Verfahren nach Anspruch 1 oder 4, **dadurch gekennzeichnet, dass** durch die Zugangseinrichtung (5) für alle bei ihr eingehenden Anrufe die Rufnummer des Anrufers mit einer in ihrem Speicher für den DynDNS-Server (3) hinterlegten Absenderreferenzrufnummer verglichen und von der Zugangseinrichtung (5) nur im Falle einer Übereinstimmung der Rufnummer des Anrufers mit der in ihrem Speicher hinterlegten Absenderreferenzrufnummer selbsttätig eine Internetverbindung aufgebaut wird.

6. Zugangseinrichtung (5) zur Durchführung des Verfahrens nach Anspruch 1 ausgebildet als ISDN-Wähl- und Anrufempfangseinrichtung (5) mit Routerfunktionalität, mit einer Verarbeitungseinheit und einem konfigurierbaren Speicher oder Speicherbereich zur Hinterlegung mindestens einer Einwahlnummer für einen Interneteinwahlknoten **dadurch gekennzeichnet, dass** deren Verarbeitungseinheit zur Ausführung einer Firmware ausgebildet ist, mittels welcher ein Betriebsmodus der Zugangseinrichtung (5) aktivierbar ist, in welchem von der Zugangseinrichtung (5) beim Eingang eines ISDN-Anrufs durch die Anwahl des Interneteinwahlknotens mit der in ihrem Speicher hinterlegten Einwahlnummer selbsttätig eine ISDN-Internetverbindung aufgebaut, eventuell erforderliche Authentifizierungsdaten an den Einwahlknoten übergeben und die der Zugangseinrichtung (5) im Zuge dessen zugewiesene IP-Adresse an einen DynDNS-Server (3) übertragen wird und dass über die aufgebaute Internetverbindung und die Zugangseinrichtung (5) mit dieser in einem lokalen Netzwerk (6) vernetzte Geräte ansprechbar sind.

7. Zugangseinrichtung (5) nach Anspruch 6, **dadurch gekennzeichnet, dass** deren Verarbeitungseinheit zur Ausführung einer Firmware ausgebildet ist, durch welche nach dem Aufbau der ISDN-Internetverbindung eine als ein DynDNS-Client ausgebildete Softwareroutine gestartet wird, welche auf der Zugangseinrichtung (5) selbst oder einer anderen zum lokalen Netzwerk (6) gehörenden Einheit abläuft und die der Zugangseinrichtung (5) beim Aufbau der ISDN-Internetverbindung zugewiesene IP-Adresse über das Internet an den DynDNS-Server (3) übermittelt.

8. Zugangseinrichtung (5) nach Anspruch 6 oder 7, **dadurch gekennzeichnet, dass** diese als ein modifizierter ISDN-Router ausgebildet ist.

9. Zugangseinrichtung (5) nach Anspruch 6 oder 7, **dadurch gekennzeichnet, dass** diese als Teil einer TK-Anlage ausgebildet ist.

10. Zugangseinrichtung (5) nach Anspruch 6 oder 7, **dadurch gekennzeichnet, dass** diese als Teil eines PCs ausgebildet ist.

11. Zugangseinrichtung (5) nach Anspruch 10, **dadurch gekennzeichnet, dass** diese als eine ISDN-Einsteckkarte für den PC ausgebildet ist.

12. DynDNS-Server (3) zur Durchführung des Verfahrens nach Anspruch 1, **dadurch gekennzeichnet, dass** dieser eine durch seine Betriebssoftware ansteuerbare Wähleinrichtung umfasst oder ihm eine solche Wähleinrichtung zugeordnet ist.
